# EUROPÄISCHE PATENTSCHRIFT

(11) **EP 3 011 248 B1**
(45) Veröffentlichungstag und Bekanntmachung des Hinweises auf die Patenterteilung: **03.05.2017**
(21) Anmeldenummer: 14739669.1
(22) Anmeldetag: 30.05.2014
(51) Int. Cl.: F28D 9/02, F28D 7/16, F28F 9/02, A23L 3/22

(54) **VORRICHTUNG ZUR EINFLUSSNAHME AUF DEN ABSTRÖMBEREICH EINER ROHRTRÄGERPLATTE EINES ROHRBÜNDEL-WÄRMEAUSTAUSCHERS**
APPARATUS FOR INFLUENCING THE OUTFLOW REGION OF A TUBE CARRIER PLATE OF A TUBE BUNDLE HEAT EXCHANGER
DISPOSITIF PERMETTANT D'INFLUER SUR LA ZONE DE SORTIE D'UNE PLAQUE SUPPORT DE TUBES D'UN ÉCHANGEUR DE CHALEUR À FAISCEAU DE TUBES

(30) Priorität: 22.06.2013 DE 102013010460
(43) Veröffentlichungstag der Anmeldung: 27.04.2016
(73) Patentinhaber: GEA TDS GmbH, 31157 Sarstedt (DE)
(72) Erfinder: ROLLE, Ulrich, 48351 Everswinkel (DE); LÜTKEBRUNS, Günter, 48599 Gronau-Epe (DE); SCHWENZOW, Uwe, 48683 Ahaus (DE); ASSING, Hubert, 48683 Ahaus (DE); GRIMM, Markus, 23883 Klein-Zecher (DE); SPEEMANN, Ralf, 48341 Altenberge (DE)
(74) Vertreter: Hauck Patentanwaltspartnerschaft mbB
(86) Internationale Anmeldenummer: PCT/EP2014/001469
(87) Internationale Veröffentlichungsnummer: WO 2014/202182

(56) Entgegenhaltungen:
- WO-A2-2011/085784
- DE-B3- 10 311 529

## Beschreibung

### TECHNISCHES GEBIET

Die Erfindung betrifft eine Vorrichtung zur Einflussnahme auf den Abströmbereich einer Rohrträgerplatte eines Rohrbündel-Wärmeaustauschers, insbesondere für die Nahrungsmittel- und Getränkeindustrie, und hier insbesondere für temperatursensible und/oder viskose Produkte der Molkereiindustrie, beispielsweise Desserts, Soßen oder Konzentrate, nach dem Oberbegriff des Anspruchs 1.

### STAND DER TECHNIK

Die indirekte Produktbeheizung, beispielsweise in UHT-Anlagen (UHT: Ultra-Hoch-Temperatur) durch einen Wärmeaustausch an einer Wand kann sowohl mit sogenannten Platten-Wärmeaustauscheranlagen oder auch, wie in der nachfol-gend beschriebenen Erfindung, mit sogenannten Rohrbündel-Wärmeaustauschern erfolgen, bei denen die Wärmenergie durch die Rohrwände einer Gruppe von In-nenrohren übertragen wird. Dabei strömt das zu behandelnde Lebensmittelprodukt in den Innenrohren, während ein Wärmeträgermedium, nachfolgend im Rahmen der Erfindung auch als Heizmedium bezeichnet, in der Regel Wasser oder Dampf, im Ringspaltraum des Mantelrohres, welches die parallel geschalteten Innenrohre umgibt, strömt. Ein diesbezüglicher Rohrbündel-Wärmeaustauscher ist aus der DE 94 03 913 U1 bekannt.

Besonders temperatursensible Produkte, wie beispielsweis Desserts, Soßen oder Konzentrate, insbesondere mit hoher Viskosität und ggf. mit feststoffhaltigen Bestandteilen wie ganzen Stücken, Pulpe oder Fasern, erfordern eine genaue und zügige Temperaturanpassung des Produkts an die geforderten Temperaturverhältnisse. Darüber hinaus ist bei der Erfüllung der vorg. Zielsetzung gleichzeitig eine thermisch und mechanisch schonende Behandlung des Produkts erforderlich. Aus der Forderung nach einer thermisch schonenden Behandlung folgt, dass alle Teilmengen eines der Wärmebehandlung der in Rede stehenden Art zu unterziehenden Produkts zeitgleich und über die gleiche Zeitdauer den erforderlichen gleichen Temperatur-Niveau-Verlauf durchlaufen. Anders ausgedrückt bedeutet dies, dass alle Teilmengen bei gleicher Verweilzeit gleichen thermischen und strömungsmechanischen Bedingungen unterliegen.

Mechanisch schonende Behandlung bedeutet, dass die mechanische Belastung des Produkts so niedrig wie möglich gehalten wird. Eine diesbezügliche Belastung tritt insbesondere immer dann auf, wenn das Produkt Scherkräften unterworfen wird. Letztere treten notorisch bei Umlenkungen, unstetigen Querschnittsübergängen, Verzweigungen und Vereinigungen von Strömungsführungen auf.

Dem Verzweigungsproblem der Strömung im Eintrittsbereich der Rohrträgerplatten eines Rohrbündel-Wärmeaustauschers (z.B. DE 94 03 913 U1), wie er in UHT-Anlagen bevorzugt Verwendung findet, widmet sich die DE 103 11 529 B3**.** Die unter der dort angegebenen Aufgabenstellung vorgeschlagenen zielführenden Maßnahmen betreffen ausschließlich die Verzweigung eines Produkts auf eine Anzahl Teilmengen dieses Produkts aufnehmende Innenrohre des Rohrbündel-Wärmeaustauschers, wobei u.a. ein Verdrängerkörper vorgesehen ist, der axialsymmetrisch und konzentrisch zur Rohrträgerplatte angeordnet ist. Dieser Stand der Technik betrifft damit ausschließlich eine Vorrichtung zur Einflussnahme auf den Anströmbereich einer Rohrträgerplatte eines in Rede stehenden Rohrbündel-Wärmeaustauschers. Dabei sind die Innenrohre über die gesamte Kreisfläche der Rohrträgerplatte, in der Regel auf mehr als einem Teilkreis, ausschließlich eines eng begrenzten zentralen Bereichs, verteilt. Unter diesen Voraussetzungen liegen von vornherein sowohl im Eintritts- als auch im Austrittsbereich der jeweiligen Rohrträgerplatte, demnach bei der Verzweigung und der Vereinigung der Strömung, unterschiedlich lange Strömungswege zum Eintritt in die Innenrohre bzw. vom Austritt aus diesen vor. Schon allein dadurch kommen unterschiedliche Verweilzeiten für die die jeweiligen Innenrohre durchströmenden Teilmengen des Produkts zustande.

Ausweislich der Beschreibung der DE 103 11 529 B3 erfolgt die querschnittsmäßige Auslegung der bekannten Rohrbündel-Wärmeaustauscher in der Regel derart, dass die mittlere Strömungsgeschwindigkeit im Innenrohr auch in einem Verbindungsbogen vorliegt, der einerseits mit einem festlagerseitigen Austauscherflansch und andererseits mittelbar mit einem mit einer loslagerseitigen Rohrträgerplatte fest verbundenen loslagerseitigen Anschlussstutzen verbunden ist. Die strömungsmechanische Auslegung des Strömungszugs zwischen dem Verbindungsbogen und dem Eintritt in die Innenrohre in der festlagerseitigen Rohrträgerplatte ist durch die folgenden Merkmale gekennzeichnet. Die über den Verbindungsbogen mit der mittleren Strömungsgeschwindigkeit zugeführte Strömung wird in einem düsenartig verengten Ringspaltquerschnitt, der zwischen dem Verdrängerkörper und dem festlagerseitigen Austauscherflansch gebildet ist, beschleunigt. Die daraus resultierende Strömungsgeschwindigkeit findet ihre maximale Strömungsgeschwindigkeit in einem minimalen Ringspaltquerschnitt (engste Stelle des Ringspaltquerschnittes). Hinter der engsten Stelle des Ringspaltquerschnittes erweitert sich letzterer infolge eines erweiternden Durchtrittsquerschnitts, da diese Erweiterung durch einen vorderen Teil des Verdrängerkörpers, der sich in Anströmrichtung erweitert, nicht in gleichem Maße kompensiert werden kann. Damit erfährt die Strömung hinter der engsten Stelle des Ringspaltquerschnittes nunmehr eine Verzögerung. An einer Strömungsabrissstelle am beispielsweise größten Außendurchmesser des vorderen Teils des Verdrängerkörpers löst die Strömung bestimmungsgemäß ab. Hinter der Strömungsabrissstelle reduziert sich der Querschnitt des Verdrängerkörpers in einem hinteren Teil stetig bis auf einen minimalen Querschnitt eines Schaftes, sodass im Zusammenwirken mit dem erweiternden Durchtrittsquerschnitt ein sich stetig erweiternder Durchtrittsquerschnitt für die Strömung zur Verfügung steht. Die Strömung wird somit im Bereich des hinteren Teils des Verdrängerkörpers weiter verzögert, bis sie mit der mittleren Strömungsgeschwindigkeit in die Innenrohre eintritt.

Die WO 2011/085784 A2 offenbart ein Rohrbündel-Wärmetauscher gemäß dem Oberbegriff von Anspruch 1, und schlägt zur Lösung des vorstehend beschriebenen Problems unterschiedlicher Verweilzeiten bei der Verzweigung und der Vereinigung der Strömung vor, sämtliche Innenrohre des Rohrbündels kreisringförmig, auf einem einzigen Kreis und in einem als Ringraum ausgebildeten Außenkanal des Rohrbündel-Wärmeaustauschers anzuordnen, wobei sich die parallel durchströmten Innenrohre in Längsrichtung des Außenkanals erstrecken und endseitig jeweils in einer Rohrträgerplatte abstützen.

Diese Anordnung der Innenrohre wird kombiniert mit jeweils einem konzentrisch an der Rohrträgerplatte am Eintritt und am Austritt des Produkts fest angeordneten axialsymmetrischen Verdrängerkörper. Der jeweilige Verdrängerkörper greift zentrisch durch einen der Rohrträgerplatte zugeordneten Austauscherflansch hindurch, wobei der Austauscherflansch auf seiner der zugeordneten Rohrträgerplatte abgewandten Seite eine Anschlussöffnung aufweist, die sich vorzugsweise axialsymmetrisch über einen vorzugsweise konisch oder konusförmig ausgebildeten, insbesondere von Unstetigkeitsstellen freien Übergang bis zu einem endseitig vorgesehenen erweiterten Durchtrittsquerschnitt öffnet. Der jeweilige Verdrängerkörper bildet mit einer durch die Anschlussöffnung, den konischen oder konusförmigen Übergang und den erweiterten Durchtrittsquerschnitt gebildeten Innenkontur einen ringraumförmigen Kanal aus, der sich von der Anschlussöffnung bis zur Rohrträgerplatte hin in seinem jeweiligen Ringspalt-Durchtrittsquerschnitt stetig erweitert. Die endseitigen Bereiche des bekannten Rohrbündel-Wärmeaustauschers sind, zumindest jeweils im Anschluss an den Außenkanal, spiegelbildlich formidentisch und abmessungsgleich ausgebildet, wobei diese Symmetrie ausdrücklich auch die beiden Verdrängerkörper und die beiden ringraumförmigen Kanäle umfasst.

Dadurch ergeben sich für alle zwischen Produkt-Eintritt und -Austritt in die Innenrohre verzweigenden und sich vereinigenden Teilmengen des Produkts nahezu kongruente Strömungswege und weitestgehend einheitliche Wärmeübergangsbedingungen in allen relevanten Bereichen des Rohrbündelwärmeaustauschers.

Kongruente Strömungswege bedeutet jedoch nicht gleichzeitig, dass die Strömungszüge der einzelnen Teilmengen mit einer unveränderten und eine Beschleunigung bzw. Verzögerung vermeidenden Fließgeschwindigkeit konstruiert sind. Ausweislich der Beschreibung der WO 2011/085784 A2 ändern sich ein ringförmiger erster Kanal im ersten Austauscherflansch (Bereich des Produkt-Eintritts; Anströmseite) und ein ringförmiger zweiter Kanal im zweiten Austauscherflansch (Bereich des Produkt-Austritts; Abströmseite) und damit die zugeordneten Strömungsgeschwindigkeiten jeweils stetig und stoßfrei. Die auf der Abströmseite verzweigten Teilmengen strömen folglich jeweils mit einer dritten Strömungsgeschwindigkeit aus den Innenrohren der zweiten Rohrträgerplatte in eine zweite Einlaufrinne ab, anschließend erfolgt im Zuge der Vereinigung der Teilmengen eine Verzögerung auf einen Minimalwert der unverzweigten Strömung im größten Ringspaltquerschnitt dieser zweiten Einlaufrinne, einer zweiten Strömungsgeschwindigkeit, und schließlich wird die unverzweigte Strömung im ringförmigen zweiten Kanal auf eine erste Strömungsgeschwindigkeit in der zweiten Anschlussöffnung beschleunigt.

Mit Blick auf die Bildung von Ablagerungen an den Rohrträgerplatten hat sich im praktischen Betrieb gezeigt, dass bei der Erhitzung von viskosen Molkereiprodukten, beispielsweise Konzentraten, die vorstehend dargestellte symmetrische Strömungsgeometrie an der eintrittsseitigen und angeströmten Rohrträgerplatte zu keinen die Standzeit beeinträchtigenden Ablagerungen führt, wohl aber an der austrittsseitigen, der abgeströmten Rohrträgerplatte. Diese Ablagerungen treten am Übergang vom Austritt der Innenrohre in den erweiterten Durchtrittsquerschnitt auf. Im Bereich der eintrittsseitigen Rohrträgerplatte führt der dieser, in Strömungsrichtung gesehen, vorgelagerte erweiterte Durchtrittsquerschnitt, der sich vom Durchtrittsquerschnitt am Produkt-Eintritt durch stetige Erweiterung ausgebildet hat, zu einer Wirbelbildung in diesem Bereich, die die Ablagerungen am Eintritt in die Innenrohre und an den Stegen zwischen den Innenrohren verhindert. Im Bereich der austrittsseitigen und abgeströmten Rohrträgerplatte führt der dort entsprechend vorliegende erweiterte Durchtrittsquerschnitt, der sich anschließend auf den Durchtrittsquerschnitt am Produkt-Austritt stetig reduziert, zu Totraumbereichen, in denen sich Ablagerungen bevorzugt und übermäßig bilden, wodurch sich die Standzeit des Rohrbündel-Wärmeaustauschers reduziert.

Es ist Aufgabe der vorliegenden Erfindung, eine Vorrichtung der gattungsgemäßen Art derart weiterzubilden, dass die Neigung zur Bildung von Ablagerungen an der zweiten, der austrittsseitigen Rohrträgerplatte und im zugeordneten zweiten, dem austrittsseitigen Austauscherflansch deutlich reduziert wird.

### ZUSAMMENFASSUNG DER ERFINDUNG

Diese Aufgabe wird durch eine Vorrichtung mit den Merkmalen des Anspruchs 1 gelöst. Vorteilhafte Ausführungsformen der Vorrichtung sind Gegenstand der Unteransprüche. Die erfindungsgemäße Vorrichtung findet vorteilhaft Verwendung für Produkte der Molkereiindustrie nach Anspruch 15.

Die vorliegende Erfindung widmet sich der Abströmseite eines Rohrbündel-Wärmeaustauschers, wie er in seinem grundsätzlichen Aufbau in der WO 2011/085784 A2 beschrieben ist, und schlägt für diese Abströmseite Lösungen vor. Die Anströmseite kann im Rahmen der Erfindung mit einem eintrittsseitigen Verdrängerkörper und einem daraus resultierenden ringraumförmigen eintrittsseitigen Kanal ausgebildet werden, wie die WO 2011/085784 A2 dies offenbart. Jedoch ist eine diesbezügliche eintrittsseitige Ausgestaltung nicht zwingend zusammen mit der erfinderischen Lehre verbunden; ein Verzicht auf diesbezügliche eintrittsseitige Maßnahmen ist möglich. Mit der vorliegenden Erfindung sollen die dem Stand der Technik gemäß WO 2011/085784 A2 innewohnenden Prinzipien nicht verlassen werden, die bei gleicher Verweilzeit für alle Teilmengen des Produkts eine thermisch besonders schonende Behandlung sicherzustellen und dessen mechanische Belastung so niedrig wie möglich zu halten.

Die Erfindung geht aus von einem Rohrbündel-Wärmeaustauscher nach der WO 2011/085784 A2 mit wenigstens einem Rohrbündel, das aus einer Gruppe von parallel geschalteten, innenseits jeweils produktdurchströmten Innenrohren besteht, die kreisringförmig, auf einem einzigen Kreis und in einem als Ringraum ausgebildeten Außenkanal angeordnet sind und sich in dessen Längsrichtung erstrecken. Die Innenrohre sind endseitig jeweils in einer ersten und einer zweiten Rohrträgerplatte abgestützt. Der Außenkanal für ein Heizmedium wird von außen durch einen Außenmantel und von innen durch einen Innenmantel begrenzt. Die Anzahl parallel vom Produkt durchströmter Innenrohre bildet gemeinsam einen Innenkanal, der mit einem für alle Innenrohre gemeinsamen, einerseits in einem ersten Austauscherflansch ausgebildeten Produkt-Eintritt und mit einem gemeinsamen, andererseits in einem zweiten Austauscherflansch ausgebildeten Produkt-Austritt versehen ist. Eine erste und eine zweite Anschlussöffnung sind jeweils zentrisch im ersten und im zweiten Austauscherflansch auf dessen der zugeordneten Rohrträgerplatte abgewandten Flanschseite angeordnet. Die zweite Anschlussöffnung erweitert sich, entgegen der Strömungsrichtung, axialsymmetrisch und radial im zweiten Austauscherflansch, setzt sich bis zu einem endseitig vorgesehenen erweiterten austrittsseitigen Durchtrittsquerschnitt fort und stellt eine fluidgängige Verbindung zu den Innenrohren her. Ein axialsymmetrischer austrittsseitiger Verdrängerkörper ist koaxial zur zweiten Anschlussöffnung und konzentrisch zur zweiten Rohrträgerplatte angeordnet und mit dieser fest verbunden. Er bildet mit einer durch die zweite Anschlussöffnung und ihre radiale Erweiterung bis zu dem erweiterten austrittsseitigen Durchtrittsquerschnitt gebildeten austrittsseitigen Innenkontur einen ringraumförmigen austrittsseitigen Kanal aus.

Der erfinderische Grundgedanke besteht darin, die bekannte Lehre des sich, in Strömungsrichtung gesehen, zum Produkt-Austritt hin stetig verjüngenden ringraumförmigen austrittsseitigen Kanals zu verlassen und diesen derart auszubilden, dass er wenigstens überall in seinem Bereich zwischen einem größten Außendurchmesser des austrittsseitigen Verdrängerkörpers und der zweiten Anschlussöffnung einen Kanaldurchtrittsquerschnitt aufweist, der einen konstanten Durchtrittsquerschnitt über die gesamte Länge des definierten Bereichs besitzt und der in diesem Bereich einem Gesamtdurchtrittsquerschnitt aller, d.h. der insgesamt vorgesehenen Anzahl parallel durchströmten Innenrohre, die jeweils einen Einzeldurchtrittsquerschnitt besitzen, entspricht.

Aus dieser Ausgestaltung, die einen konstanten Durchtrittsquerschnitt über die gesamte Länge des ringraumförmigen austrittsseitigen Kanals bedeutet, resultiert eine weitestgehend gleiche, unveränderte, Beschleunigungen und Verzögerungen vermeidende Fließgeschwindigkeit des Produkts im gesamten durchströmten Bereich, beginnend am Austritt der Innenrohre in der zweiten Rohrträgerplatte bis zum Eintritt in einen an den zweiten Austauscherflansch angeschlossenen Verbindungsbogen.

Dabei kann der austrittsseitige Verdrängerkörper mit einer festlegbaren axialen Eingriffstiefe in den realisierten Durchtrittsquerschnitt des Verbindungsbogens eingreifen. Diese axiale Eingriffstiefe hängt auch davon ab, ob der Nenndurchtrittsquerschnitt des Verbindungsbogens, der sich aus seinem Nenndurchmesser bemisst und von dem realisierten Durchtrittsquerschnitt abweichen kann, dem Gesamtdurchtrittsquerschnitt aller parallel durchströmten Innenrohre entspricht oder ggf. etwas größer gewählt wurde. Über die axiale Eingriffstiefe des austrittsseitigen Verdrängerkörpers kann dann bei dem letztgenannten Sachverhalt eine stetige Anpassung der Strömungsgeschwindigkeit im ringraumförmigen austrittsseitigen Kanal an jene im realisierten Durchtrittsquerschnitt des Verbindungsbogens erfolgen.

Da es vorteilhaft ist, den ersten und zweiten Austauscherflansch formidentisch und abmessungsgleich auszubilden, um die Teilevielfalt zu reduzieren, wie dies eine vorteilhafte Ausführungsform vorsieht, manifestieren sich in diesem Falle die Maßnahmen zur Bildung des erfindungsgemäßen ringraumförmigen austrittsseitigen Kanals allein an dem austrittsseitigen Verdrängerkörper.

Um, in Strömungsrichtung gesehen, nach dem Austritt aus den Innenrohren, und zwar bereits innerhalb des zweiten Austauscherflansches und im Übergangsbereich zum ringraumförmigen austrittsseitigen Kanal, eine unstetige Vergrößerung des Durchtrittsquerschnitte für das abströmende Produkt zu vermeiden, ist vorgesehen, dass der größte Außendurchmesser des austrittsseitigen Verdrängerkörpers mindestens bis an den Durchmesser des Kreises, auf dem die Innenrohre angeordnet sind, heranreicht und ggf. diesen Kreis übergreift. Dadurch wird durch eine zwischen einem Verdrängerfuß und dem größten Außendurchmesser des austrittsseitigen Verdrängerkörpers gebildete Ringfläche eine volumenvermindernde Berandung eines Durchtrittsquerschnittes eines Ringraumes vor Eintritt der Strömung in den ringraumförmigen austrittsseitigen Kanal erreicht, wodurch die Ausbildung einer gleichförmigen Fließgeschwindigkeit sichergestellt ist.

Bestmögliche Voraussetzungen für die konkrete Realisierung kongruenter Strömungswege werden dadurch geschaffen, dass die Innenrohre des Rohrbündels im größtmöglichen Umfangsbereich der Rohrträgerplatte angeordnet sind. Diese Ausgestaltung wird vorzugsweise so ausgeführt, dass die Spaltbreite des Ringraumes so klein wie für eine hinreichende Umströmung mit Heizmedium nötig und der Kreisdurchmesser, auf dem die Innenrohre angeordnet sind, so groß wie möglich bemessen sind.

Ein weiterer Vorschlag sieht vor, dass die Innenrohre des Rohrbündels über den Umfang des Kreises gleichverteilt angeordnet sind. Dadurch und in Verbindung mit den vorstehend beschriebenen Abmessungsverhältnissen werden die Strömungswege von der unverzweigten Gesamtströmung zur jeweils verzweigten Teilströmung in den Innenrohren und umgekehrt absolut kongruent.

Die Realisierung des ringraumförmigen Außenkanals gelingt sehr einfach dadurch, dass der als Ringraum ausgebildete Außenkanal innenseits von einem Innenmantel begrenzt ist, der nach einem ersten Vorschlag in Form eines inneren Rohres oder nach einem zweiten Vorschlag in Form einer Innenstange begrenzt ist, wobei inneres Rohr und Innenstange sich jeweils endseitig in der Rohrträgerplatte abstützen. Dadurch befinden sich die auf einem einzigen Kreis angeordneten Innenrohre in einem äquidistanten, relativ eng zu bemessenden Ringraum, in dem es keine Toträume und stagnierenden Bereiche der Strömung des Heizmediums gibt.

Günstige Strömungsverhältnisse im Austrittsbereich der Innenrohre werden gemäß einem weiteren Vorschlag dadurch sichergestellt, dass der austrittsseitige Verdrängerkörper pilzförmig ausgebildet ist, dass er mit seinem Verdrängerfuß unmittelbar an der zweiten Rohrträgerplatte endet, und dass der größte Außendurchmesser des austrittsseitigen Verdrängerkörpers in einer Ebene senkrecht zu einer Symmetrieachse des austrittsseitigen Verdrängerkörpers auf einen Außendurchmesser des Verdrängerfußes reduziert ist, wobei der Übergang zweckmäßig hinreichen ausgerundet ist.

Eine Verstetigung der Durchtrittsquerschnitte im Verlauf der Strömung des Produkts vom Austritt aus den Innenrohren bis zum Eintritt in den ringraumförmigen austrittsseitigen Kanal wird weiterhin dadurch sichergestellt, dass der ringraumförmige austrittsseitige Kanal an seinem erweiterten Durchtrittsquerschnitt innerhalb des zweiten Austauscherflansches in einen Ringraum einmündet, der koaxial zu der Symmetrieachse orientiert ist, der radial außen mit einem Innendurchmesser des erweiterten austrittsseitigen Durchtrittsquerschnitts bündig fluchtet, der radial innen bis an den Verdrängerfuß heranreicht und der seitlich von einer zwischen dem Verdrängerfuß und dem größten Außendurchmesser des austrittsseitigen Verdrängerkörpers gebildeten Ringfläche begrenzt ist, und dass der Ringraum eine axiale Ringraumbreite aufweist, die mindestens einem Viertel eines Rohrinnendurchmessers des Innenrohres entspricht. Die diesbezügliche Bemessung der Ringraumbreite schafft annähernd Gleichheit zwischen dem kreisförmigen Zuströmquerschnitt, resultierend aus dem Durchtrittsquerschnitt des einzelnen Innenrohres, und einem zylindermantelförmigen Abströmquerschnitt jenes Teils des Ringraumes, der dem jeweiligen Innenrohr zugeordnet ist.

Eine weitestgehende Verminderung der mechanischen Belastung des Produkts bei dessen Vereinigung in einen Gesamtstrom (Austrittsverluste bei Vereinigung) wird in nicht voraussehbarer Weise erreicht, wenn, wie dies ein weiterer Vorschlag vorsieht, die Innenrohre endseitig jeweils in und bündig mit einem Boden einer Einlaufrinne ausmünden, die von der Seite des zweiten Austauscherflansches in Form einer ringförmigen Vertiefung in die zweite Rohrträgerplatte eingreift. Dabei ist der Boden um einen gleichzeitig auch die Tiefe der Einlaufrinne bestimmenden Rücksprung von der Stirnfläche der zweiten Rohrträgerplatte beabstandet.

Austrittsverluste im vorstehenden Sinne werden weiter dadurch reduziert, dass sich die Einlaufrinne vorzugsweise symmetrisch zum Außendurchmesser des jeweiligen Innenrohres hin stetig, vorzugsweise mit konkaver Oberfläche, verjüngt.

Die Austrittsverluste aus den Innenrohren werden minimiert, wenn das jeweilige Innenrohr in einer Anschlussbohrung im Boden der Einlaufrinne Aufnahme findet, die in Form eines in die Einlaufrinne eingreifenden, sich stetig zum Innenrohr hin verjüngenden Einlauftrichters angesenkt ist. Die Formgestalt des Einlauftrichters ist dabei vorzugsweise tulpenförmig, konusförmig, konisch oder kegelförmig.

Der Übergang zwischen dem ringraumförmigen austrittsseitigen Kanal im zweiten Austauscherflansch und der Einlaufrinne in der zweiten Rohrträgerplatte gestaltet sich strömungstechnisch besonders günstig, wenn der erweiterte austrittsseitige Durchtrittsquerschnitt mit seinem Innendurchmesser bündig und stetig in eine außenseitige Flanke und der Verdrängerfuß mit seinem endseitigen ausgebildeten Außendurchmesser bündig und stetig in eine innenseitige Flanke der Einlaufrinne übergehen.

Eine vorteilhafte Ausgestaltung der Vorrichtung sieht vor, dass die Eintrittseite des Rohrbündel-Wärmeaustauschers derart ausgebildet ist, dass sich die erste Anschlussöffnung, in Strömungsrichtung gesehen, im ersten Austauscherflansch axialsymmetrisch radial erweitert und bis zu einem endseitig vorgesehenen erweiterten eintrittsseitigen Durchtrittsquerschnitt fortsetzt und eine fluidgängige Verbindung zu den Innenrohren herstellt, dass ein axialsymmetrischer eintrittsseitiger Verdrängerkörper koaxial zur ersten Anschlussöffnung und konzentrisch zur ersten Rohrträgerplatte angeordnet und mit dieser fest verbundenen ist, und dass der eintrittsseitige Verdrängerkörper zusammen mit einer durch die erste Anschlussöffnung und ihre radiale Erweiterung bis zu dem erweiterten eintrittsseitigen Durchtrittsquerschnitt gebildeten eintrittsseitigen Innenkontur einen ringraumförmigen eintrittsseitigen Kanal ausbildet. Insoweit ist diese Ausgestaltung adäquat zur Ausgestaltung auf der Austrittsseite, allerdings unterliegt der ringraumförmige eintrittsseitige Kanal anderen Bemessungskriterien, beispielsweise wie sie in der WO 2011/085784 A2 vorgeschlagen werden.

Die erfindungsgemäße Vorrichtung hat sich besonders geeignet und als vorteilhaft herausgestellt, wenn sie für temperatursensible und/oder viskose Produkte der Molkereiindustrie, wie beispielsweise Desserts, Soßen oder Konzentrate verwendet wird.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung zwei bevorzugte Ausführungsbeispiele der Vorrichtung dargestellt und nachfolgend nach Aufbau und Funktion beschrieben. Es zeigen
- **Figur 1**: im Meridianschnitt eine erste Ausführungsform der Vorrichtung, realisiert an einem bevorzugt verwendeten Rohrbündel-Wärmeaustauscher, wobei die Darstellung auf den eintritts- und den austrittsseitigen Bereich des Rohrbündel-Wärmeaustauschers beschränkt ist;
- **Figur 2**: im Meridianschnitt und in vergrößerter Darstellung den austrittseitigen Bereich gemäß **Figur 1****;**
- **Figur 2a**: eine abermals vergrößerte Darstellung eines Ausschnitts aus dem Meridianschnitt gemäß **Figur 2** im Bereich eines ringraumförmigen austrittsseitigen Kanals in Verbindung mit einem Übergangsbereich zu einem Austritt aus einem Innenrohr;
- **Figur 3**: im Meridianschnitt die erste Ausführungsform gemäß **Figur 2** im Vergleich zu einer zweiten Ausführungsform nach **Figur 4****,** wobei
- **Figur 4**: im Meridianschnitt einen gegenüber **Figur 3** abgewandelten austrittsseitigen Verdrängerkörper und eine abgewandelte zweite Rohrträgerplatte zeigt.

### DETAILLIERTE BESCHREIBUNG

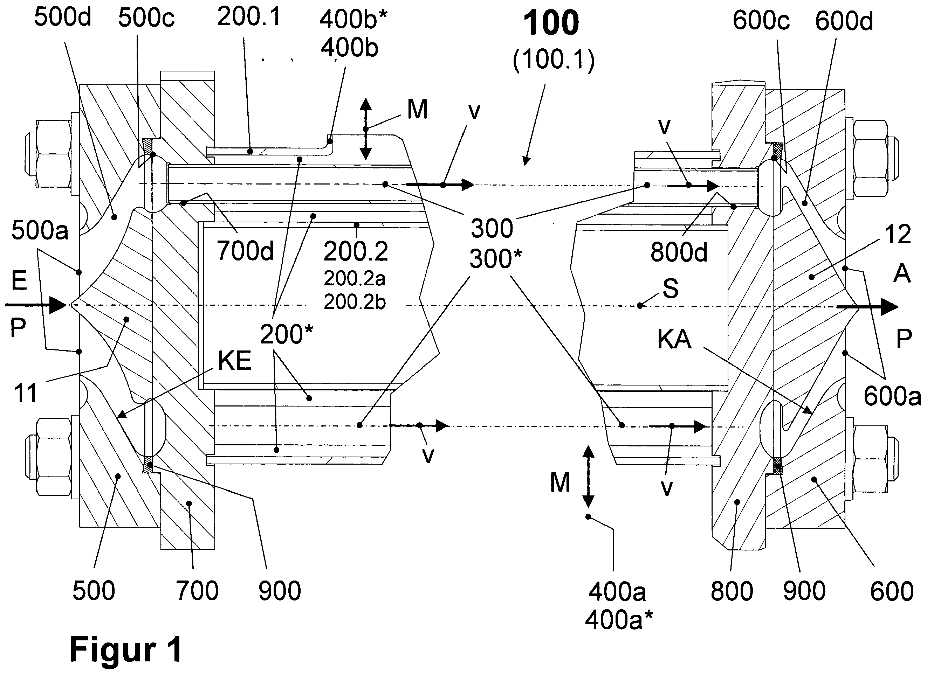

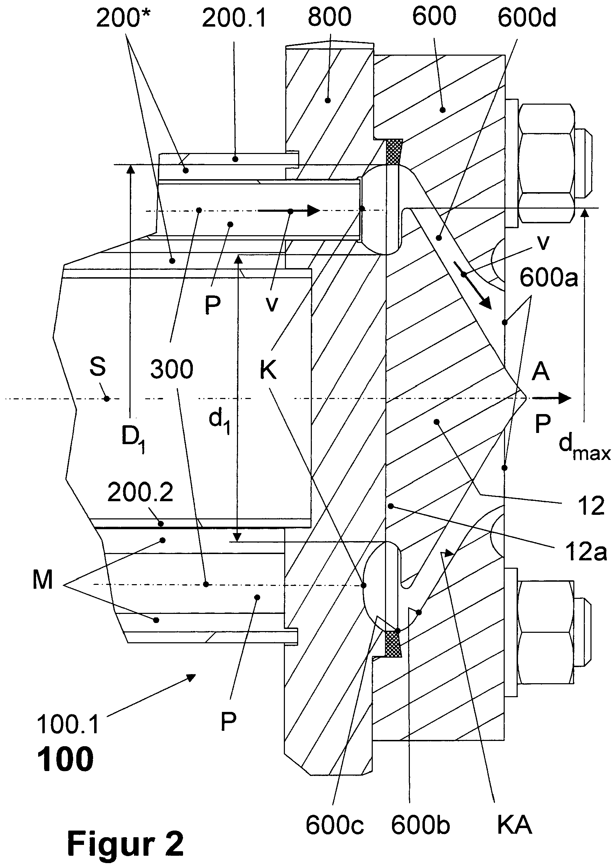

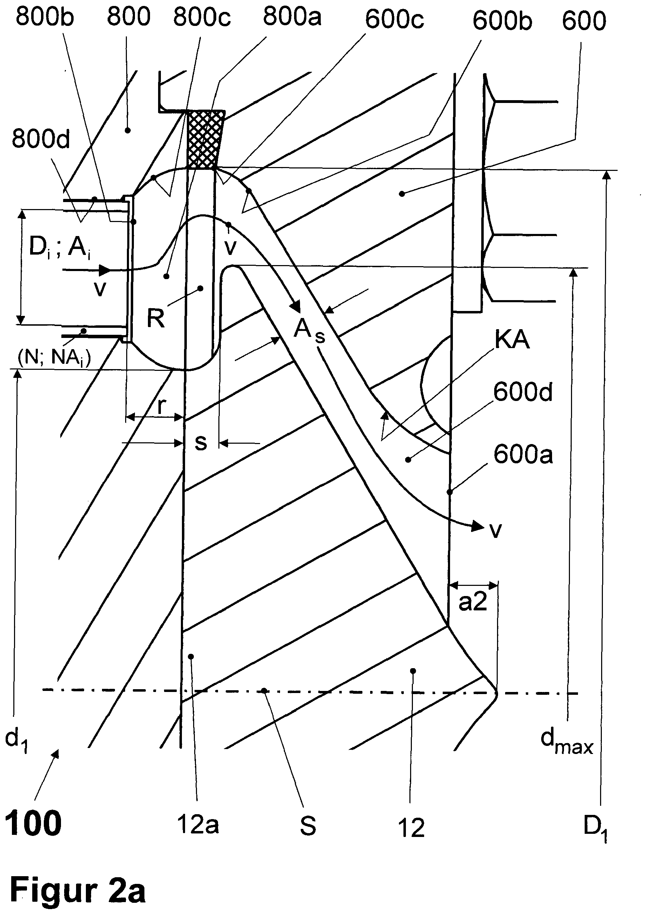

Ein Rohrbündel-Wärmeaustauscher 100 in einer ersten Ausführungsform, von dem ein Rohrbündel 100.1 dargestellt ist, weist zwischen einem von einem gesamten Produkt P durchsetzten Produkt-Eintritt E und einem Produkt-Austritt A (siehe **Figur 1**) für alle sich zwischen letzteren verzweigenden und vereinigenden Teilmengen des Produkts P kongruente Strömungswege auf. Dies wird gegenständlich dadurch erreicht, dass bei dem Rohrbündel 100.1, das aus einer Gruppe von parallel geschalteten, innenseits jeweils produktdurchströmten Innenrohren 300 besteht, sämtliche Innenrohre 300 kreisringförmig, auf einem einzigen Kreis K (**Figur 2**) und in einem als Ringraum ausgebildeten Außenkanal 200* angeordnet sind und sich in dessen Längsrichtung erstrecken und endseitig jeweils in einer ersten und einer zweiten Rohrträgerplatte 700, 800 abstützen. Die Innenrohre 300 sind im größtmöglichen Umfangsbereich der Rohrträgerplatte 700, 800, vorzugsweise über den Umfang des Kreise K gleichverteilt, angeordnet. Eine Anzahl N der sich achsparallel zu einem Außenmantel 200.1 des Außenkanals 200* durch letzteren erstreckenden, gemeinsam einen Innenkanal 300* bildenden Innenrohre 300 ist endseitig jeweils durch die erste Rohrträgerplatte 700 und die zweite Rohrträgerplatte 800 (beide auch als Rohrspiegelplatte bezeichnet) hindurchgeführt und an ihrem jeweiligen Rohraußendurchmesser und an ihrer jeweiligen Stirnfläche dort verschweißt. Der Produkt-Eintritt E ist in einem ersten Austauscherflansch 500, der der ersten Rohrträgerplatte 700 zugeordnet ist, und der Produkt-Austritt A ist in einem zweiten Austauscherflansch 600, der der zweiten Rohrträgerplatte 800 zugeordnet ist, ausgebildet.

In der Regel ist der Rohrbündel-Wärmeaustauscher 100 aus mehr als einem Rohrbündel 100.1 zusammengesetzt. Das Rohrbündel 100.1 besteht in seinem mittleren Teil aus dem den Außenkanal 200* begrenzenden Außenmantel 200.1 mit der, bezogen auf die Darstellungslage, linksseitig angeordneten ersten Rohrträgerplatte 700 und der rechtsseitig in gleicher Weise angeordneten zweiten Rohrträgerplatte 800. Im Bereich des rechtsseitigen Endes des Außenmantels 200.1 ist an letzterem ein nicht dargestellter, in einen ersten Anschlussstutzen 400a ausmündender erster Querkanal 400a* und im Bereich des linksseitigen Endes des Außenmantels 200.1 ist an letzterem ein in einen zweiten Anschlussstutzen 400b ausmündender zweiter Querkanal 400b* zur Beaufschlagung mit einem Heizmedium M vorgesehen.

Der Außenkanal 200* für das Heizmedium M wird von außen durch den Außenmantel 200.1 und von innen durch einen Innenmantel 200.2 begrenzt. Der Innenkanal 300* ist einerseits mit dem für alle Innenrohre 300 gemeinsamen Produkt-Eintritt E und andererseits mit dem für alle Innenrohre 300 gemeinsamen Produkt-Austritt A verbunden. Eine erste und eine zweite Anschlussöffnung 500a, 600a ist jeweils zentrisch im ersten und im zweiten Austauscherflansch 500, 600 auf dessen der zugeordneten Rohrträgerplatte 700, 800 abgewandten Flanschseite angeordnet. Die zweite Anschlussöffnung 600a erweitert sich, entgegen der Strömungsrichtung, axialsymmetrisch und radial im zweiten Austauscherflansch 600, setzt sich bis zu einem endseitig vorgesehenen erweiterten austrittsseitigen Durchtrittsquerschnitt 600c fort und stellt eine fluidgängige Verbindung zu den Innenrohren 300 her. Ein axialsymmetrischer austrittsseitiger Verdrängerkörper 12 ist koaxial zur zweiten Anschlussöffnung 600a und konzentrisch zur zweiten Rohrträgerplatte 800 angeordnet und mit dieser fest verbundenen. Er bildet mit einer durch die zweite Anschlussöffnung 600a und ihre radiale Erweiterung bis zu dem erweiterten austrittsseitigen Durchtrittsquerschnitt 600c gebildeten austrittsseitigen Innenkontur KA einen ringraumförmigen austrittsseitigen Kanal 600d aus.

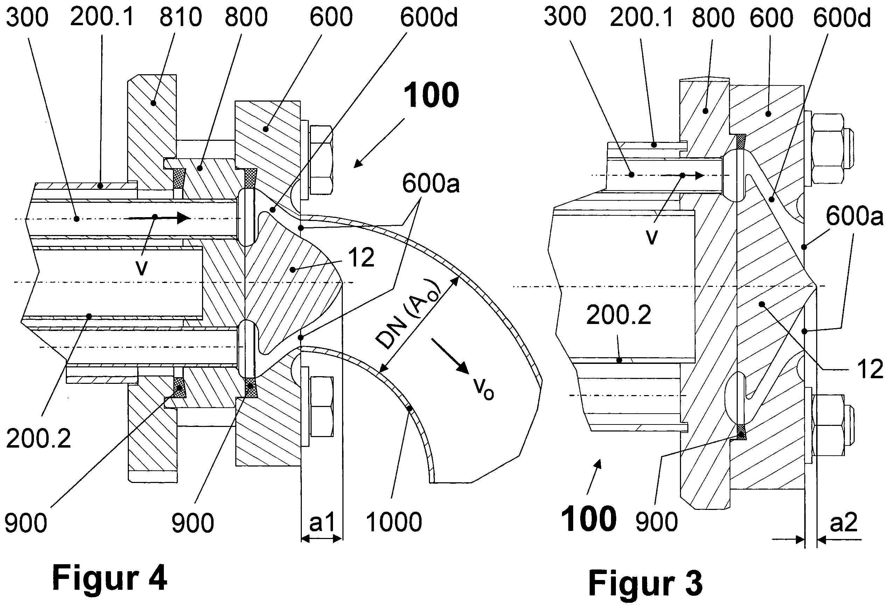

Abhängig von der Anordnung des jeweiligen Rohrbündels 100.1 im RohrbündelWärmeaustauscher 100 und seiner jeweiligen Beschaltung können die Innenrohre 300, bezogen auf die Darstellungslage, entweder von links nach rechts oder umgekehrt von dem Produkt P durchströmt werden, wobei eine mittlere Strömungsgeschwindigkeit im Innenrohr 300 und damit im Innenkanal 200* mit v gekennzeichnet ist. Die Bauteile, die die ein- und austrittsspezifischen Bedingungen festlegen, wechseln dann ihre Position entsprechend. Die querschnittsmäßige Auslegung des Innenrohres 300 erfolgt in der Regel derart, dass diese mittlere Strömungsgeschwindigkeit v mindestens gleich oder größer als eine erste Strömungsgeschwindigkeit v₀ in einem Verbindungsbogen 1000 ist (**Figur 4**), der einerseits in dem ersten Austauscherflansch 500 und andererseits in dem zweiten Austauscherflansch 600 enden kann. Der erste Austauscherflansch 500 ist über eine Flanschdichtung 900 gegen die Rohrträgerplatte 700 abgedichtet. Entsprechendes gilt für den zweiten Austauscherflansch 600 und die zweite Rohrträgerplatte 800.

In der ersten Ausführungsform sind die endseitigen Bereiche des RohrbündelWärmeaustauschers 100, mit Ausnahme eines eintritts- und des austrittsseitigen Verdrängerkörpers 11, 12, jeweils im Anschluss an den Außenkanal 200*, vorzugsweise spiegelbildlich formidentisch und abmessungsgleich ausgebildet, so dass sich, weil sich die vorliegende Erfindung auf die Abströmseite des Rohrbündels 100.1 bezieht, die folgende detaillierte Beschreibung vornehmlich auf den austrittsseitigen Endbereich beschränken kann und die entsprechenden Bezugszeichen des anderen Endbereichs lediglich angeführt werden und der Aufbau des eintrittsseitigen Bereichs sich sinngemäß aus dem Aufbau des austrittsseitigen Bereichs erschließt. Der Austauscherflansch 600, 500 weist auf seiner der zugeordneten Rohrträgerplatte 800, 700 abgewandten Seite die Anschlussöffnung 600a, 500a auf, die einen Nenndurchmesser DN aufweisen und damit einem Nenndurchtrittsquerschnitt A₀ des dort angeschlossenen Verbindungsbogens 1000 (**Figur 4**) entsprechen (Aₒ = DN²π/4).

Die Anschlussöffnung 600a, 500a öffnet sich im Austauscherflansch 600, 500 axialsymmetrisch über einen Übergang 600b (ein entsprechender Übergang ist in 500 nicht bezeichnet) bis zu dem endseitig vorgesehenen erweiterten austrittsseitigen Durchtrittsquerschnitt 600c bzw. einem erweiterten eintrittsseitigen Durchtrittsquerschnitt 500c. Der erweiterte Durchtrittsquerschnitt 600c, 500c ist dabei im Wesentlichen zylindrisch mit einem Innendurchmesser D₁ (größter Durchmesser des erweiterten Durchtrittsquerschnitts 600c, 500c) ausgeführt (**Figuren 2****,** **2a**), und ersterer formt zusammen mit dem Übergang 600b die austrittsseitige Innenkontur KA im zweiten Austauscherflansch 600 und letzterer formt zusammen mit dem entsprechenden Übergang in 500 eine eintrittsseitige Innenkontur KE im ersten Austauscherflansch 500. Die eintrittsseitige Innenkontur KE bildet mit dem eintrittsseitigen Verdrängerkörper 11 in an sich bekannter Weise einen ringraumförmigen eintrittsseitigen Kanal 500d aus.

Die nachfolgende Beschreibung beschränkt sich auf die Abströmseite des Rohrbündels 100.1. Koaxial zur zweiten Anschlussöffnung 600a und konzentrisch zur zweiten Rohrträgerplatte 800 ist der mit dieser fest verbundene, axialsymmetrische austrittsseitige Verdrängerkörper 12 vorgesehen (**Figuren 1****,** **2****,** **2a****,** **3**), der mit der durch die zweite Anschlussöffnung 600a, den Übergang 600b und den erweiterten austrittsseitigen Durchtrittsquerschnitt 600c gebildeten austrittsseitigen Innenkontur KA den ringraumförmigen austrittsseitigen Kanal 600d ausbildet. Der ringraumförmige austrittsseitige Kanal 600d weist wenigstens überall in seinem Bereich zwischen einem größten Außendurchmesser dₘₐₓ des austrittsseitigen Verdrängerkörpers 12 und der zweiten Anschlussöffnung 600a einen Kanaldurchtrittsquerschnitt A_{S} auf (**Figur 2a**), der einen konstanten Durchtrittsquerschnitt über die gesamte Länge des definierten Bereichs besitzt und der in diesem Bereich einem Gesamtdurchtrittsquerschnitt NAᵢ aller parallel durchströmten Innenrohre 300 der Anzahl N, die jeweils einen Einzeldurchtrittsquerschnitt Aᵢ besitzen, entspricht (A_{S} = konst). Dabei bemisst sich der Einzeldurchtrittsquerschnitt mit Aᵢ = Dᵢ²π/4, wobei es sich bei Dᵢ um den Rohrinnendurchmesser des Innenrohres 300 handelt. Der größte Außendurchmesser dₘₐₓ des austrittsseitigen Verdrängerkörpers 12 reicht mindestens bis an den Durchmesser des Kreises K heranreicht (**Figuren 2****,** **2a**).

Der austrittsseitige Verdrängerkörper 12 ist pilzförmig ausgebildet und er endet mit einem Verdrängerfuß 12a unmittelbar an der zweiten Rohrträgerplatte 800. Der größte Außendurchmesser dₘₐₓ des austrittsseitigen Verdrängerkörpers 12 ist in einer Ebene senkrecht zu einer Symmetrieachse S des austrittsseitigen Verdrängerkörpers 12 auf einen Außendurchmesser d₁ des Verdrängerfußes 12a reduziert, wobei der Übergangsbereich vorzugsweise hinreichen ausgerundet ist (**Figur 2a**).

Der ringraumförmige austrittsseitige Kanal 600d mündet an seinem erweiterten Durchtrittsquerschnitt 600c innerhalb des zweiten Austauscherflansches 600 in einen Ringraum R ein, der koaxial zu der Symmetrieachse S orientiert ist, der radial außen mit dem Innendurchmesser D₁ des erweiterten austrittsseitigen Durchtrittsquerschnitts 600c bündig fluchtet, der radial innen bis an den Verdrängerfuß 12a heranreicht und der seitlich von einer zwischen dem Verdrängerfuß 12a und dem größten Außendurchmesser dₘₐₓ des austrittsseitigen Verdrängerkörpers 12 gebildeten Ringfläche begrenzt ist. Der Ringraum R weist eine axiale Ringraumbreite s auf, die vorzugsweise mindestens einem Viertel eines Rohrinnendurchmessers Dᵢ des Innenrohres 300 entspricht (**Figur 2a****;** s = Dᵢ/4; aus der Kontinuitätsbedingung Aᵢ = Dᵢ²π/4 = Dᵢπs).

Die Innenrohre 300 münden endseitig jeweils in und bündig mit einem Boden 800b einer Einlaufrinne 800a aus (**Figur 2a**), die von der Seite des zweiten Austauscherflansches 600 in Form einer ringförmigen Vertiefung in die zweite Rohrträgerplatte 800 eingreift. Der Boden 800b ist um einen Rücksprung r von der Stirnfläche der zweiten Rohrträgerplatte 800 beabstandet. Die Einlaufrinne 800a verjüngt sich stetig, vorzugsweise symmetrisch zum Außendurchmesser des jeweiligen Innenrohres 300 hin, wobei eine konkave Verjüngung bevorzugt ist.

Zur Aufnahme des jeweiligen Endes des Innenrohres 300 in der Rohrträgerplatte 800, 700 sind eine zweite und eine erste Anschlussbohrung 800d, 700d (**Figuren 2a****,** **1**) vorgesehen, wobei die erstere in den Boden 800b ausmündet (**Figur 2a**). Die zweite Anschlussbohrung 800d ist vorzugsweise in Form eines in die Einlaufrinne 800a eingreifenden, sich stetig zum Innenrohr 300 hin verjüngenden Einlauftrichters 800c angesenkt. Der erweiterte austrittsseitige Durchtrittsquerschnitt 600c geht mit seinem Innendurchmesser D₁ vorzugsweise bündig und stetig in eine außenseitige Flanke und der austrittsseitige Verdrängerfuß 12a geht mit seinem endseitig ausgebildeten Außendurchmesser d₁ vorzugsweise bündig und stetig in eine innenseitige Flanke der Einlaufrinne 800a über (**Figur 2a**).

Eine bevorzugte Ausführungsform nach den **Figur 1** bis **4** sieht vor, dass der als Ringraum ausgebildete Außenkanal 200* innenseits von dem Innenmantel 200.2 in Form eines inneren Rohres 200.2a begrenzt ist, das sich endseitig jeweils in der Rohrträgerplatte 700; 800 abstützt. Eine weitere Ausführungsform sieht vor, dass der als Ringraum ausgebildete Außenkanal 200* innenseits von dem Innenmantel 200.2 in Form einer Innenstange 200.2b begrenzt ist, die sich endseitig jeweils in der Rohrträgerplatte 700; 800 abstützt.

In **Figur 4** ist eine zweite Ausführungsform der erfindungsgemäßen Vorrichtung dargestellt, wobei hier, im Gegensatz zur ersten Ausführungsform nach **Figur 3****,** die zweite Rohrträgerplatte 800, und ggf. auch die erste Rohrträgerplatte 700, nur der Aufnahme der Innenrohre 300 dient und ein dritter Austauscherflansch 810 für die Aufnahme des Außenmantels 200.1 vorgesehen ist. Die zweite Rohrträgerplatte 800 ist, wie vorstehend beschrieben, einerseits gegenüber dem zweiten Austauscherflansch mittels der Flanschdichtung 900, und andererseits gegenüber dem dritten Austauscherflansch 810 mittels einer weiteren Flanschdichtung 900 abgedichtet. Der austrittsseitige Verdrängerkörper 12 ist fülliger als bei der ersten Ausführungsform gemäß **Figur 3** ausgebildet, und er greift um eine axiale erste Eindringtiefe a1 in den am zweiten Austauscherflansch 600 angeschlossenen Verbindungsbogen 1000 ein, die deutlich größer als eine axiale zweite Eindringtiefe a2 gemäß **Figur 3** ausgeführt ist. Die strömungsmechanische Wirksamkeit dieser Bemessung wurde vorstehend beschrieben.

### BEZUGSZEICHENLISTE DER VERWENDETEN ABKÜRZUNGEN

- 11: eintrittsseitiger Verdrängerkörper

- 12: austrittsseitiger Verdrängerkörper
- 12a: Verdrängerfuß

- 100: Rohrbündel-Wärmeaustauscher, allgemein
- 100.1: Rohrbündel

- 200*: Außenkanal
- 200.1: Außenmantel
- 200.2: Innenmantel
- 200.2a: inneres Rohr (Innenmantel)
- 200.2b: Innenstange (Innenmantel)

- 300*: Innenkanal
- 300: Innenrohr

- 400a: erster Anschlussstutzen
- 400a*: erster Querkanal
- 400b: zweiter Anschlussstutzen
- 400b*: zweiter Querkanal

- 500: erster Austauscherflansch
- 500a: erste Anschlussöffnung
- 500c: erweiterter eintrittsseitiger Durchtrittsquerschnitt
- 500d: ringraumförmiger eintrittsseitiger Kanal

- 600: zweiter Austauscherflansch
- 600a: zweite Anschlussöffnung
- 600b: Übergang
- 600c: erweiterter austrittsseitiger Durchtrittsquerschnitt
- 600d: ringraumförmiger austrittsseitiger Kanal
- 700: erste Rohrträgerplatte (Rohrspiegelplatte)
- 700d: erste Anschlussbohrung

- 800: zweite Rohrträgerplatte (Rohrspiegelplatte)
- 800a: Einlaufrinne
- 800b: Boden
- 800c: Einlauftrichter
- 800d: zweite Anschlussbohrung

- 810: dritter Austauscherflansch
- 900: Flanchdichtung
- 1000: Verbindungsbogen/Verbindungsarmatur

- a1: erste Eingriffstiefe
- a2: zweite Eingriffstiefe

- d₁: Außendurchmesser (Verdrängerfuß 12a)
- dₘₐₓ: größter Außendurchmesser (Verdrängerkörper 12)

- r: Rücksprung (der Innenrohre 300)
- s: axiale Ringraumbreite (s = Dᵢ/4; aus Aᵢ = Dᵢ²π/4 = Dᵢπs)

- v: mittlere Strömungsgeschwindigkeit (im Innenrohr 300 und im ringraumförmigen austrittsseitigen Kanal 600d)
- v₀: erste Strömungsgeschwindigkeit (im Verbindungsbogen 1000; v₀ = v)

- A: Produkt-Austritt
- Aᵢ: Einzeldurchtrittsquerschnitt (des Innenrohres (Aᵢ = Dᵢ²π/4))
- NAᵢ: Gesamtdurchtrittsquerschnitt (aller parallel durchströmten Innenrohre)
- A_{S}: Kanaldurchtrittsquerschnitt (A_{S} = konst)
- A_{O}: Nenndurchtrittsquerschnitt (des Verbindungsbogens; Aₒ = DN²π/4)

- Dᵢ: Rohrinnendurchmesser (Innenrohr 300)
- D₁: Innendurchmesser (des erweiterten Durchtrittsquerschnitts 600c)
- DN: Nenndurchmesser (des Verbindungsbogens (Aₒ = DN²π/4))

- E: Produkt-Eintritt
- K: Kreis

- KA: austrittsseitige Innenkontur
- KE: eintrittsseitige Innenkontur

- M: Heizmedium
- N: Anzahl (der Innenrohre 300)

- P: Produkt (Lebensmittelprodukt)

- R: Ringraum
- S: Symmetrieachse

## Patentansprüche

1. Vorrichtung zur Einflussnahme auf den Abströmbereich einer Rohrträgerplatte eines Rohrbündel-Wärmeaustauschers, insbesondere für die Nahrungsmittel- und Getränkeindustrie, mit wenigstens einem Rohrbündel (100.1) des Rohrbündel-Wärmeaustauschers (100), das aus einer Gruppe von parallel geschalteten, innenseits jeweils produktdurchströmten Innenrohren (300) besteht, die kreisringförmig, auf einem einzigen Kreis (K) und in einem als Ringraum ausgebildeten Außenkanal (200*) angeordnet sind und sich in dessen Längsrichtung erstrecken und endseitig jeweils in einer ersten und einer zweiten Rohrträgerplatte (700, 800) abstützen, mit einem den Außenkanal (200*) von außen begrenzenden Außenmantel (200.1) und von innen begrenzenden Innenmantel (200.2) für ein Heizmedium (M), mit einer Anzahl (N) Innenrohre (300), die gemeinsam einen Innenkanal (300*) bildet, mit einem für alle Innenrohre (300) gemeinsamen, einerseits in einem ersten Austauscherflansch (500) ausgebildeten Produkt-Eintritt (E) und einem gemeinsamen, andererseits in einem zweiten Austauscherflansch (600) ausgebildeten Produkt-Austritt (A) für das Produkt (P), mit einer ersten und einer zweiten Anschlussöffnung (500a, 600a), die jeweils zentrisch im ersten und im zweiten Austauscherflansch (500, 600) auf dessen der zugeordneten Rohrträgerplatte (700, 800) abgewandten Flanschseite angeordnet sind, mit der zweiten Anschlussöffnung (600a), die sich entgegen der Strömungsrichtung im zweiten Austauscherflansch (600) axialsymmetrisch radial erweitert und bis zu einem endseitig vorgesehenen erweiterten austrittsseitigen Durchtrittsquerschnitt (600c) fortsetzt und eine fluidgängige Verbindung zu den Innenrohren (300) herstellt, mit einem koaxial zur zweiten Anschlussöffnung (600a) und konzentrisch zur zweiten Rohrträgerplatte (800) fest verbundenen, axialsymmetrischen austrittsseitigen Verdrängerkörper (12), der zusammen mit einer durch die zweite Anschlussöffnung (600a) und ihre radiale Erweiterung bis zu dem erweiterten austrittsseitigen Durchtrittsquerschnitt (600c) gebildeten austrittsseitigen Innenkontur (KA) einen ringraumförmigen austrittsseitigen Kanal (600d) ausbildet,
**dadurch gekennzeichnet,**
**dass** der ringraumförmige austrittsseitige Kanal (600d) wenigstens überall in seinem Bereich zwischen einem größten Außendurchmesser (dₘₐₓ) des austrittsseitigen Verdrängerkörpers (12) und der zweiten Anschlussöffnung (600a) einen Kanaldurchtrittsquerschnitt (Aₛ) aufweist, der einen konstanten Durchtrittsquerschnitt über die gesamte Länge des definierten Bereichs besitzt und der in diesem Bereich einem Gesamtdurchtrittsquerschnitt (NAᵢ) aller parallel durchströmten Innenrohre (300) der Anzahl (N), die jeweils einen Einzeldurchtrittsquerschnitt (Aᵢ) besitzen, entspricht.

2. Vorrichtung nach Anspruch 1,
**dadurch gekennzeichnet,**
**dass** der größte Außendurchmesser (dₘₐₓ) des austrittsseitigen Verdrängerkörpers (12) mindestens bis an den Durchmesser des Kreises (K) heranreicht.

3. Vorrichtung nach einem der vorhergehenden Ansprüche,
**dadurch gekennzeichnet,**
**dass** die Innenrohre (300) des Rohrbündels (100.1) im größtmöglichen Umfangsbereich der Rohrträgerplatte (700, 800) angeordnet sind.

4. Vorrichtung nach einem der vorhergehenden Ansprüche,
**dadurch gekennzeichnet,**
**dass** die Innenrohre (300) des Rohrbündels (100.1) über den Umfang des Kreises (K) gleichverteilt angeordnet sind.

5. Vorrichtung nach einem der vorhergehenden Ansprüche,
**dadurch gekennzeichnet,**
**dass** der als Ringraum ausgebildete Außenkanal (200*) innenseits von dem Innenmantel (200.2) in Form eines inneren Rohres (200.2a) begrenzt ist, das sich endseitig jeweils in der Rohrträgerplatte (700; 800) abstützt.

6. Vorrichtung nach einem der vorhergehenden Ansprüche,
**dadurch gekennzeichnet,**
**dass** der als Ringraum ausgebildete Außenkanal (200*) innenseits von dem Innenmantel (200.2) in Form einer Innenstange (200.2b) begrenzt ist, die sich endseitig jeweils in der Rohrträgerplatte (700; 800) abstützt.

7. Vorrichtung nach einem der vorhergehenden Ansprüche,
**dadurch gekennzeichnet,**
**dass** der austrittsseitige Verdrängerkörper (12) pilzförmig ausgebildet ist, dass er mit einem Verdrängerfuß (12a) unmittelbar an der zweiten Rohrträgerplatte (800) endet, und dass der größte Außendurchmesser (dₘₐₓ) des austrittsseitigen Verdrängerkörpers (12) in einer Ebene senkrecht zu einer Symmetrieachse (S) des austrittsseitigen Verdrängerkörpers (12) auf einen Außendurchmesser (d₁) des Verdrängerfußes (12a) reduziert ist.

8. Vorrichtung nach Anspruch 7,
**dadurch gekennzeichnet,**
**dass** der ringraumförmige austrittsseitige Kanal (600d) an seinem erweiterten Durchtrittsquerschnitt (600c) innerhalb des zweiten Austauscherflansches (600) in einen Ringraum (R) einmündet, der koaxial zu der Symmetrieachse (S) orientiert ist, der radial außen mit einem Innendurchmesser (D₁) des erweiterten austrittsseitigen Durchtrittsquerschnitts (600c) bündig fluchtet, der radial innen bis an den Verdrängerfuß (12a) heranreicht und der seitlich von einer zwischen dem Verdrängerfuß (12a) und dem größten Außendurchmesser (dₘₐₓ) des austrittsseitigen Verdrängerkörpers (12) gebildeten Ringfläche begrenzt ist, und dass der Ringraum (R) eine axiale Ringraumbreite (s) aufweist, die mindestens einem Viertel eines Rohrinnendurchmessers (Dᵢ) des Innenrohres (300) entspricht.

9. Vorrichtung nach einem der vorhergehenden Ansprüche,
**dadurch gekennzeichnet,**
**dass** die Innenrohre (300) endseitig jeweils in und bündig mit einem Boden (800b) einer Einlaufrinne (800a) ausmünden, die von der Seite des zweiten Austauscherflansches (600) in Form einer ringförmigen Vertiefung in die zweite Rohrträgerplatte (800) eingreift, und dass der Boden (800b) um einen Rücksprung (r) von der Stirnfläche der zweiten Rohrträgerplatte (800) beabstandet ist.

10. Vorrichtung nach Anspruch 9,
**dadurch gekennzeichnet,**
**dass** sich die Einlaufrinne (800a) symmetrisch zum Außendurchmesser des jeweiligen Innenrohres (300) hin stetig verjüngt.

11. Vorrichtung nach Anspruch 9 oder 10,
**dadurch gekennzeichnet,**
**dass** das jeweilige Innenrohr (300) in einer Anschlussbohrung (800d) im Boden (800b) Aufnahme findet, die in Form eines in die Einlaufrinne (800a) eingreifenden, sich stetig zum Innenrohr (300) hin verjüngenden Einlauftrichters (800c) angesenkt ist.

12. Vorrichtung nach einem der Ansprüche 9 bis 11,
**dadurch gekennzeichnet,**
**dass** der erweiterte austrittsseitige Durchtrittsquerschnitt (600c) mit seinem Innendurchmesser (D₁) bündig und stetig in eine außenseitige Flanke und der Verdrängerfuß (12a) mit seinem endseitig ausgebildeten Außendurchmesser (d₁) bündig und stetig in eine innenseitige Flanke der Einlaufrinne (800a) übergehen.

13. Vorrichtung nach einem der vorhergehenden Ansprüche,
**dadurch gekennzeichnet,**
**dass** sich die erste Anschlussöffnung (500a), in Strömungsrichtung gesehen, im ersten Austauscherflansch (500) axialsymmetrisch radial erweitert und bis zu einem endseitig vorgesehenen erweiterten eintrittsseitigen Durchtrittsquerschnitt (500c) fortsetzt und eine fluidgängige Verbindung zu den Innenrohren (300) herstellt, dass ein axialsymmetrischer eintrittsseitiger Verdrängerkörper (11) koaxial zur ersten Anschlussöffnung (500a) und konzentrisch zur ersten Rohrträgerplatte (700) angeordnet und mit dieser fest verbundenen ist, und dass der eintrittsseitige Verdrängerkörper (11) zusammen mit einer durch die erste Anschlussöffnung (500a) und ihre radiale Erweiterung bis zu dem erweiterten eintrittsseitigen Durchtrittsquerschnitt (500c) gebildeten eintrittsseitigen Innenkontur (KE) einen ringraumförmigen eintrittsseitigen Kanal (500d) ausbildet.

14. Vorrichtung nach Anspruch 13,
**dadurch gekennzeichnet,**
**dass** der erste und der zweite Austauscherflansch (500, 600) und die erste und die zweite Rohrträgerplatte (700, 800) formidentisch und abmessungsgleich ausgebildet sind.

15. Verwendung einer Vorrichtung nach einem der vorhergehenden Ansprüche für temperatursensible und/oder viskose Produkte (P) der Molkereündustrie.

## Claims

1. A device for influencing the outflow region of a tube carrier plate of a tube bundle heat exchanger, in particular for the food and beverage industry, having at least one tube bundle (100.1) of the tube bundle heat exchanger (100) which consists of a group of parallel-connected inner tubes (300) through each of which product flows on the inside in each case, and that are arranged in an annular manner on a single circle (K) and in an outer channel (200*) formed as an annular gap, and extend in its longitudinal direction, and are each braced at the end in a first and second tube carrier plate (700, 800) with an outer jacket (200.1) that, on the outside, borders the outer channel (200*) which is bordered on the inside by an inner jacket (200.2) for a heating medium (M), with a number (N) of inner tubes (300) that jointly form an inner channel (300*), with a product inlet (E) on the one hand for all inner tubes (300) together that is formed in a first exchanger flange (500), and a joint product outlet (A) for the product (P) on the other hand that is formed in a second exchanger flange (600), with a first and a second connection opening (500a, 600a) which are each arranged centrally in the first and second exchanger flange (500, 600) on its flange side facing away from the associated tube carrier plate (700, 800), with the second connection opening (600a) that expands radially in an axially symmetrical manner in the second exchanger flange (600) opposite the direction of flow and continues up to an expanded outlet-side passage cross section (600c) provided at the end side and establishes a fluidic connection to the inner tubes (300), with an axially symmetrical, outlet-side displacement body (12) which is securely connected coaxially to the second connection opening (600a) and concentrically to the second tube carrier plate (800), said displacement body forming an annular, outlet-side channel (600d) together with an outlet-side inner contour (KA) formed by the second connection opening (600a) and its radial expansion up to the expanded outlet-side passage cross section (600c),
**characterized in that**
the annular outlet-side channel (600d) has a channel passage cross section (A_{S}), at least everywhere within its region between a maximum outer diameter (dₘₐₓ) of the outlet-side displacement body (12) and the second connection opening (600a), which possesses a constant passage cross section over the entire length of the defined region, and that, within this region, corresponds to an overall passage cross section (NAᵢ) of all inner tubes (300) of the number (N) with a parallel flow that each possess an individual passage cross section (Aᵢ).

2. The device according to claim 1,
**characterized in that**
the maximum outer diameter (dₘₐₓ) of the outlet-side displacement body (12) extends at least up to the diameter of the circle (K).

3. The device according to one of the preceding claims,
**characterized in that**
the inner tubes (300) of the tube bundle (100.1) are arranged in the largest possible circumferential region of the tube carrier plate (700, 800).

4. The device according to one of the preceding claims,
**characterized in that**
the inner tubes (300) of the tube bundle (100.1) are arranged evenly distributed over the circumference of the circle (K).

5. The device according to one of the preceding claims,
**characterized in that**
the outer channel (200*) formed as an annular gap is bordered on the inside by the inner jacket (200.2) in the form of an inner tube (200.2a) that, at the end, is braced in the tube carrier plate (700; 800).

6. The device according to one of the preceding claims,
**characterized in that**
the outer channel (200*) formed as an annular gap is bordered on the inside by the inner jacket (200.2) in the form of an inner rod (200.2b) that, at the end, is braced in the tube carrier plate (700; 800).

7. The device according to one of the preceding claims,
**characterized in that**
the outlet-side displacement body (12) is formed in the shape of a mushroom and terminates directly with a displacement foot (12a) on the second tube carrier plate (800), and the maximum outer diameter (dₘₐₓ) of the outlet-sided displacement body (12) is reduced to an outer diameter (d₁) of the displacement foot (12a) in a plane perpendicular to an axis of symmetry (S) of the outlet-side displacement body (12).

8. The device according to claim 7,
**characterized in that**
the expanded passage cross section (600c) within the second exchanger flange (600) of the annular outlet-side channel (600d) ends in an annular gap (R) which is oriented coaxial to the axis of symmetry (S) which is flush, radially to the outside, with an inner diameter (D₁) of the expanded outlet-side passage cross section (600c) which extends radially to the inside up to the displacement foot (12a) and is bordered on the side by an ring surface formed between the displacement foot (12a) and the maximum outer diameter (dₘₐₓ) of the outlet-side displacement body (12), and the annular gap (R) has an axial annular gap width (s) which corresponds to at least one-fourth of a tube inner diameter (Dᵢ) of the inner tube (300).

9. The device according to one of the preceding claims,
**characterized in that**
at the end side, the inner tubes (300) each end within and flush with a floor (800b) of an inlet channel (800a) that engages in the second tube carrier plate (800) from the side of the second exchanger flange (600) in the form of an annular recess, and the floor (800b) is at a distance of a return (r) from the end face of the second tube carrier plate (800).

10. The device according to claim 9,
**characterized in that**
the inlet channel (800a) tapers gradually symmetrical to the outer diameter of the respective inner tube (300).

11. The device according to claim 9 or 10,
**characterized in that**
the respective inner tube (300) is accommodated in a connecting hole (800d) in the floor (800b) that is sunk in the form of a feed funnel (800c) engaging in the inlet channel (800a) and gradually tapering toward the inner tube (300).

12. The device according to one of the claims 9 to 11,
**characterized in that**
the inner diameter (D₁) of the expanded outlet-side passage cross section (600c) transitions flush and smoothly into an exterior flank, and the outer diameter (d₁) formed at the end of the displacement foot (12a) transitions flush and continuously into an interior flank of the inlet channel (800a).

13. The device according to one of the preceding claims,
**characterized in that**
viewed in the direction of flow, the first connection opening (500a) expands radially in an axially symmetrical manner in the first exchanger flange (500) and continues up to an expanded, inlet-side passage cross section (500c) provided at the end and creates a fluidic connection to the inner tubes (300), an axially symmetrical inlet-side displacement body (11) is arranged coaxial to the first connection opening (500a) and concentric to the first tube carrier plate (700) and is securely connected thereto, and the inlet-side displacement body (11) forms an annular inlet-side channel (500d) together with an inlet-side inner contour (KE) formed by the first connection opening (500a) and its radial expansion up to the expanded inlet-side passage cross section (500c).

14. The device according to claim 13,
**characterized in that**
the first and second exchanger flange (500, 600) and the first and second tube carrier plate (700, 800) are designed with an identical shape and equivalent dimensions.

15. A method and a device according to one of the preceding claims for temperaturesensitive and/or viscous products (P) of the dairy industry.

## Revendications

1. Dispositif permettant d'influer sur la zone de sortie d'une plaque support de tubes d'un échangeur de chaleur à faisceau de tubes, en particulier pour l'industrie des aliments et des boissons, avec au moins un faisceau de tubes (100.1) de l'échangeur de chaleur à faisceau de tubes (100) qui se compose d'un groupe de tubes intérieurs (300) montés en parallèle parcourus intérieurement respectivement par des produits, qui sont disposés en forme d'anneau de cercle sur un cercle (K) unique et dans un canal extérieur (200*) constitué en tant qu'espace annulaire et qui s'étendent dans sa direction longitudinale et s'appuient côté extrémité respectivement dans une première et une deuxième plaque support de tubes (700, 800), avec une enveloppe extérieure (200.1) limitant de l'extérieur le canal extérieur (200*) et une enveloppe intérieure (200.2) limitant de l'intérieur le canal extérieur (200*) pour un milieu chauffant (M), avec un certain nombre (N) de tubes intérieurs (300) qui forment conjointement un canal intérieur (300*), avec une entrée de produit (E) commune pour tous les tubes intérieurs (300), constituée d'un côté dans une première bride d'échangeur (500) et avec une sortie de produit (A) commune pour le produit (P) constituée d'un autre côté dans une deuxième bride d'échangeur (600), avec une première et une deuxième ouverture de jonction (500a, 600a) qui sont disposées respectivement de façon centrée dans la première et dans la deuxième bride d'échangeur (500, 600) sur son côté de bride éloigné de la plaque support de tubes (700, 800) affectée, avec la deuxième ouverture de jonction (600a) qui s'élargit de façon radiale avec symétrie axiale à l'inverse du sens d'écoulement dans la deuxième bride d'échangeur (600) et se poursuit jusqu'à une section transversale de passage (600c) côté sortie, élargie, prévue côté extrémité, et réalise un raccordement fluidique avec les tubes intérieurs (300), avec un corps de déplacement (12) côté sortie, avec symétrie axiale, raccordé de façon fixe coaxialement à la deuxième ouverture de jonction (600a) et de façon concentrique à la deuxième plaque support de tubes (800), corps de déplacement qui forme un canal (600d) côté sortie en forme d'espace annulaire, conjointement avec un contour intérieur (KA) côté sortie formé par la deuxième ouverture de jonction (600a) et son élargissement radial jusqu'à la section transversale de passage (600c) côté sortie élargie,
**caractérisé en ce que,**
au moins partout dans sa zone entre un diamètre extérieur maximal (dₘₐₓ) du corps de déplacement (12) côté sortie et la deuxième ouverture de jonction (600a), le canal (600d) côté sortie en forme d'espace annulaire présente une section transversale de passage de canal (A_{S}) qui possède une section transversale de passage constante sur toute la longueur de la zone définie et qui dans cette zone correspond à une section transversale de passage totale (NAᵢ) de tous les tubes intérieurs (300) parcourus parallèles en nombre (N) qui possèdent respectivement une section transversale de passage individuelle (Aᵢ).

2. Dispositif selon la revendication 1,
**caractérisé en ce que**
le diamètre extérieur maximal (dₘₐₓ) du corps de déplacement (12) côté sortie s'étend au moins jusqu'au diamètre du cercle (K).

3. Dispositif selon l'une des revendications précédentes,
**caractérisé en ce que**
les tubes intérieurs (300) du faisceau de tubes (100.1) sont disposés dans la zone de circonférence la plus grande possible de la plaque support de tubes (700, 800).

4. Dispositif selon l'une des revendications précédentes,
**caractérisé en ce que**
les tubes intérieurs (300) du faisceau de tubes (100.1) sont disposés de façon uniformément répartie sur la circonférence du cercle (K).

5. Dispositif selon l'une des revendications précédentes,
**caractérisé en ce que**
le canal extérieur (200*) constitué en tant qu'espace annulaire est limité côté intérieur par l'enveloppe intérieure (200.2) sous la forme d'un tube intérieur (200.2a) qui s'appuie côté extrémité respectivement dans la plaque support de tubes (700 ; 800).

6. Dispositif selon l'une des revendications précédentes,
**caractérisé en ce que**
le canal extérieur (200*) constitué en tant qu'espace annulaire est limité côté intérieur par l'enveloppe intérieure (200.2) sous la forme d'une tige intérieure (200.2b) qui s'appuie côté extrémité respectivement dans la plaque support de tubes (700 ; 800).

7. Dispositif selon l'une des revendications précédentes,
**caractérisé en ce que**
le corps de déplacement (12) côté sortie est constitué en forme de champignon, **en ce qu'**il se termine par un pied de déplacement (12a) directement sur la deuxième plaque support de tubes (800), et **en ce que** le diamètre extérieur maximal (dₘₐₓ) du corps de déplacement (12) côté sortie est, dans un plan perpendiculaire à un axe de symétrie (S) du corps de déplacement (12) côté sortie, réduit à un diamètre extérieur (d₁) du pied de déplacement (12a).

8. Dispositif selon la revendication 7,
**caractérisé en ce que,**
sur sa section transversale de passage (600c) élargie, à l'intérieur de la deuxième bride d'échangeur (600), le canal (600d) côté sortie en forme d'espace annulaire débouche dans un espace annulaire (R) qui est orienté coaxialement à l'axe de symétrie (S), qui affleure radialement à l'extérieur avec un diamètre intérieur (D₁) de la section transversale de passage (600c) côté sortie élargie, qui s'étend radialement intérieurement jusqu'au pied de déplacement (12a) et qui est limité latéralement par une surface annulaire formée entre le pied de déplacement (12a) et le diamètre extérieur maximal (dₘₐₓ) du corps de déplacement (12) côté sortie, et **en ce que** l'espace annulaire (R) présente une largeur d'espace annulaire (s) axiale qui correspond à au moins un quart d'un diamètre intérieur de tube (Dᵢ) du tube intérieur (300).

9. Dispositif selon l'une des revendications précédentes,
**caractérisé en ce que**
les tubes intérieurs (300) débouchent côté extrémité dans, et en affleurement avec, un fond (800b) d'une rigole d'entrée (800a) qui engrène dans la deuxième plaque support de tubes (800) à partir du côté de la deuxième bride d'échangeur (600) sous la forme d'un creux de forme annulaire, et **en ce que** le fond (800b) est espacé, selon un retrait (r), de la face frontale de la deuxième plaque support de tubes (800).

10. Dispositif selon la revendication 9,
**caractérisé en ce que**
la rigole d'entrée (800a) se rétrécit constamment de façon symétrique en direction du diamètre extérieur du tube intérieur (300) respectif.

11. Dispositif selon la revendication 9 ou 10,
**caractérisé en ce que**
le tube intérieur (300) respectif est logé dans un alésage de jonction (800d) dans le fond (800b) qui est creusé sous la forme d'un entonnoir d'entrée (800c) engrenant dans la rigole d'entrée (800a) et se rétrécissant constamment en direction du tube intérieur (300).

12. Dispositif selon l'une des revendications 9 à 11,
**caractérisé en ce que**
la section transversale de passage (600c) côté sortie, élargie, se transforme, avec son diamètre intérieur (D₁), en affleurement et constamment en un flanc côté extérieur, et le corps de déplacement (12), avec son diamètre extérieur (d₁) constitué côté extrémité, se transforme en affleurement et constamment en un flanc côté intérieur de la rigole d'entrée (800a).

13. Dispositif selon l'une des revendications précédentes,
**caractérisé en ce que**
la première ouverture de jonction (500a), vue dans le sens de l'écoulement, s'élargit radialement avec symétrie axiale dans la première bride d'échangeur (500) et se poursuit jusqu'à une section transversale de passage (500c) côté entrée élargie prévue côté extrémité, et réalise un raccordement fluidique avec les tubes intérieurs (300), **en ce qu'**un corps de déplacement (11) côté entrée avec symétrie axiale est disposé coaxialement à la première ouverture de jonction (500a) et de façon concentrique à la première plaque support de tubes (700) et est raccordé fixement à celle-ci, et **en ce que**, conjointement avec un contour intérieur (KE) côté entrée formé par la première ouverture de jonction (500a) et son élargissement radiale jusqu'à la section transversale de passage (500c) côté entrée, élargie, le corps de déplacement (11) côté entrée constitue un canal (500d) côté entrée, en forme d'espace annulaire.

14. Dispositif selon la revendication 13,
**caractérisé en ce que**
la première et la deuxième bride d'échangeur (500, 600) et la première et la deuxième plaque support de tubes (700, 800) sont constituées avec une identité de forme et une égalité de dimension.

15. Utilisation d'un dispositif selon l'une des revendications précédentes pour des produits (P) de l'industrie laitière qui sont sensibles à la température et/ou qui sont visqueux.
